# EUROPEAN PATENT APPLICATION

(11) **EP 4 429 030 A1**
(43) Date of publication of application: **11.09.2024**
(21) Application number: 22906443.1
(22) Date of filing: 09.12.2022
(51) Int. Cl.: H01Q 19/10, H01Q 15/14

(54) **ANTENNA AND COMMUNICATION DEVICE**

(30) Priority: 17.12.2021 CN 202111555384
(71) Applicant: Huawei Technologies Co., Ltd., Shenzhen, Guangdong 518129 (CN)
(72) Inventor: WANG, Yafei, Shenzhen, Guangdong 518129 (CN); LIU, Junjie, Shenzhen, Guangdong 518129 (CN); LIU, Xianfeng, Shenzhen, Guangdong 518129 (CN); ZHOU, Lifan, Shenzhen, Guangdong 518129 (CN); HE, Chaochao, Shenzhen, Guangdong 518129 (CN)
(74) Representative: Körber, Martin Hans
(86) International application number: PCT/CN2022/138130
(87) International publication number: WO 2023/109696

(57) **Abstract**

This application provides an antenna and a communication device, to reduce a weight and a size of the antenna and improve communication quality of the antenna. The antenna includes a plurality of phase shifters, the phase shifter includes a phase shifter cavity, the plurality of phase shifter cavities are disposed in parallel, two adjacent phase shifter cavities are connected through welding, and the plurality of phase shifter cavities form a reflection plate of the antenna.

## Description

### CROSS-REFERENCE TO RELATED APPLICATIONS

This application claims priority to Chinese Patent Application No. 202111555384.X, filed with the China National Intellectual Property Administration on December 17, 2021 and entitled "ANTENNA AND COMMUNICATION DEVICE", which is incorporated herein by reference in its entirety.

### TECHNICAL FIELD

This application relates to the field of antenna technologies, and in particular, to an antenna and a communication device.

### BACKGROUND

With development of wireless communication technologies, a base station can support increasingly more communication frequency bands. Therefore, a structure of a base station antenna is increasingly complex, and antenna integration on a platform on which an antenna is located is increasingly high. To improve integration of an antenna, a requirement for miniaturization and weight reduction of the antenna is increasingly urgent.

The antenna may usually include a reflection plate, a radiating element, and a phase shifter. The radiating element and the phase shifter are fastened on the reflection plate. The phase shifter may be configured to control amplitude and phase distribution of a radiating element array, to implement a specific antenna radiation characteristic. The phase shifter may usually include a cavity and a circuit board or a sheet metal strip disposed in the cavity. The phase shifter cavity is usually fastened on the reflection plate through a screw connection. The screw connection requires that the phase shifter cavity has specific material redundancy, to ensure that the phase shifter cavity has sufficient installation space for a screw. Consequently, there is an increase in a design difficulty in miniaturization and weight reduction of the antenna. In addition, the screw connection also causes passive intermodulation deterioration, affecting communication quality of the antenna.

### SUMMARY

This application provides an antenna and a communication device, to reduce a weight and a size of the antenna and improve communication quality of the antenna.

According to a first aspect, this application provides an antenna. The antenna includes a plurality of phase shifters, the phase shifter may include a phase shifter cavity, the plurality of phase shifter cavities are disposed in parallel, two adjacent phase shifter cavities are connected through welding, and the plurality of phase shifter cavities form a reflection plate of the antenna. Alternatively, the phase shifter cavities of the phase shifters may be sequentially welded to form the reflection plate of the antenna.

In the antenna in this application, a complete reflection plate is formed by using a welded fused structure of a plurality of phase shifter cavities, so that there is no need to additionally dispose a separate reflection plate for the antenna, and a connection screw between the phase shifter cavity and the reflection plate can be omitted. This not only may reduce a volume and a weight of the antenna, but also may optimize a passive intermodulation indicator of the antenna, thereby improving communication quality of the antenna.

In some possible implementation solutions, each phase shifter cavity may include a first side wall, and the first side walls of the phase shifter cavities are disposed on a same side and are connected through welding. In this case, a fused structure obtained by welding the first side walls of the plurality of phase shifter cavities may form the reflection plate of the antenna.

It should be noted that, the phase shifter cavity may further include a second side wall, a third side wall, and a fourth side wall. The first side wall is disposed opposite to the second side wall, the third side wall is disposed opposite to the fourth side wall, and the third side wall and the fourth side wall are separately connected between the first side wall and the second side wall. The plurality of phase shifter cavities may be disposed in an array, and in two adjacent phase shifter cavities, the third side wall of one phase shifter cavity may be disposed opposite to the fourth side wall of the other phase shifter cavity.

In some possible implementation solutions, each phase shifter cavity may include a first side wall, and a flange disposed around the first side wall may be further disposed on the phase shifter cavity. Flanges of adjacent phase shifter cavities are connected through welding. For the antenna as a whole, a fused structure of flanges of the plurality of phase shifter cavities and the first side wall may form the reflection plate of the antenna.

During specific implementation, the flange and the phase shifter cavity may be of an integrally formed structure, or may be formed through machine processing. This is not limited in this application.

In addition, the flange may be an annular flange continuously disposed around an outer periphery of the first side wall, or may be of a segmented structure disposed around the outer periphery of the first side wall. When the flange is of a segmented structure, there may be a plurality of flanges, and the plurality of flanges are disposed at an interval on the outer periphery of the first side wall.

In some possible implementation solutions, flanges of two adjacent phase shifter cavities may be welded through butting, or may be welded through lapping.

In some possible implementation solutions, a weld formed between adjacent phase shifter cavities may be a continuous weld. During welding, a continuous weld may be formed in a continuous welding manner, or a plurality of segmented welds may be formed in a segmented welding manner, and an overlapping region exists between adjacent segmented welds. In this way, a continuous weld may also be formed at a location of connection between adjacent phase shifter cavities.

For example, a length of a segmented weld may range from 0.2 mm to 1000 mm, and a length of an overlapping region between adjacent segmented welds may range from 0.1 mm to 500 mm. The length of the overlapping region may ensure consistency of a continuous weld.

In some other possible implementation solutions, when the segmented welding manner is used, adjacent segmented welds may also be disposed at an interval. During specific implementation, a gap between any two adjacent segmented welds may range from 0.1 mm to 500 mm. Through this design, a welding process difficulty may be reduced while reliability of connection between the phase shifter cavities is ensured, thereby improving antenna production efficiency.

According to a second aspect, this application additionally provides an antenna. The antenna may include a reflection plate and a phase shifter, the phase shifter may include a phase shifter cavity, the phase shifter cavity may be fastened to the reflection plate through welding, and the phase shifter cavity may form a part of the reflection plate.

In this application, the phase shifter cavity and the reflection plate are welded instead of being connected through a screw in the conventional technology, and the phase shifter cavity forms a part of the reflection plate. This not only may reduce a volume and a weight of the antenna, but also may optimize a passive intermodulation indicator of the antenna, thereby improving communication quality of the antenna.

During specific implementation, there may be one or more phase shifters. This is not limited in this application. When there are a plurality of phase shifters, the plurality of phase shifters may be disposed on a same side of the reflection plate.

In some possible implementation solutions, the reflection plate may be provided with a groove corresponding to the phase shifter cavity, and a projection of the phase shifter cavity on a surface of the reflection plate may cover the corresponding groove. The reflection plate may be provided with the groove to reduce a weight of the reflection plate, thereby helping reduce an overall weight of the antenna.

In some possible implementation solutions, the phase shifter cavity may include a first side wall. During specific implementation, the first side wall may be disposed in the corresponding groove, and the first side wall is welded to an inner wall of the groove; or the first side wall may be welded on the surface of the reflection plate. In this case, the first side wall may form a part of the reflection plate.

In some possible implementation solutions, the phase shifter cavity may include a first side wall, and a flange disposed around the first side wall may be further disposed on the phase shifter cavity. During specific implementation, the flange and the first side wall located on an inner side of the flange may be disposed in the corresponding groove, and the flange is welded to an inner wall of the groove; or the flange may be welded on the surface of the reflection plate. In this case, the first side wall and the flange may form a part of the reflection plate.

In some possible implementation solutions, when the flange is disposed in the groove, the antenna may further include a connecting piece; and in a length direction of the phase shifter cavity, the flange at at least one end of the first side wall may be fixedly connected to the reflection plate through the connecting piece. For example, one end of the connecting piece may be in contact with the reflection plate, and the other end may be in contact with the flange, and the connecting piece may be connected to both the reflection plate and the flange through a screw. This design helps improve reliability of connection between the phase shifter cavity and the reflection plate. In addition, because a quantity of used screws is small, compared with the conventional technology, a passive intermodulation indicator can still be optimized.

In some possible implementation solutions, the phase shifter cavity may include a first side wall, a plurality of bosses may be disposed on the first side wall, and the plurality of bosses may be arranged in a length direction of the phase shifter cavity. The reflection plate may be provided with a plurality of holes respectively corresponding to the plurality of bosses, the first side wall of the phase shifter cavity may be disposed on a surface of the reflection plate, the boss may cover the corresponding hole, and the boss is welded to the reflection plate. In this case, the boss may form a part of the reflection plate. The reflection plate may be provided with the hole to reduce a weight of the reflection plate, thereby helping reduce an overall weight of the antenna.

During specific implementation, the boss may be disposed in the corresponding hole, and the boss is welded to an inner wall of the hole; or the boss may be welded on the surface of the reflection plate.

In some possible implementation solutions, the phase shifter cavity may include a first side wall, a flange may be disposed on a peripheral side of the first side wall, a plurality of groups of bosses may be disposed on the flange, the plurality of groups of bosses may be arranged in a length direction of the phase shifter cavity, each group of bosses may include two bosses, and the two bosses in each group of bosses may be arranged in a width direction of the phase shifter cavity. The reflection plate may be provided with a plurality of groups of holes respectively corresponding to the plurality of groups of bosses, the first side wall of the phase shifter cavity may be disposed on a surface of the reflection plate, the first side wall and the flange may cover the plurality of holes, and the boss is welded to the reflection plate. In this case, the first side wall, the flange, and the boss may form a part of the reflection plate. Similarly, the reflection plate may be provided with the hole to reduce a weight of the reflection plate, thereby helping reduce an overall weight of the antenna.

During specific implementation, each group of bosses may be disposed in the corresponding hole, and the two bosses in each group of bosses are separately welded to an inner wall of the hole; or the two bosses in each group of bosses may be welded on the surface of the reflection plate.

In some possible implementation solutions, a surface that is of each boss and that is away from the other boss in a same group may be disposed coplanar with a side wall on a corresponding side of the flange.

In some other possible implementation solutions, to reduce a welding difficulty, a surface that is of each boss and that is away from the other boss in a same group may alternatively be disposed beyond an edge of the flange.

In some possible implementation solutions, a weld formed at a location of connection between the phase shifter cavity and the reflection plate may be a continuous weld. During welding, a continuous weld may be formed in a continuous welding manner, or a plurality of segmented welds may be formed in a segmented welding manner, and an overlapping region exists between adjacent segmented welds. In this way, a continuous weld may also be formed at the location of connection between the phase shifter cavity and the reflection plate.

For example, a length of a segmented weld may range from 0.2 mm to 1000 mm, and a length of an overlapping region between adjacent segmented welds may range from 0.1 mm to 500 mm. The overlapping length may ensure consistency of a continuous weld.

In some other possible implementation solutions, when the segmented welding manner is used, adjacent segmented welds may also be disposed at an interval. During specific implementation, a gap between any two adjacent segmented welds may range from 0.1 mm to 500 mm. Through this design, a welding process difficulty may be reduced while reliability of connection between each phase shifter cavity and the reflection plate is ensured, thereby improving antenna production efficiency.

In some possible implementation solutions, the antenna may further include a radiating element, and the radiating element may be disposed on a side that is of the reflection plate and that is opposite to a side on which the phase shifter is located. The phase shifter is electrically connected to the radiating element, and the phase shifter may be configured to change amplitude and phase distribution of different radiating elements, to implement specific antenna radiation performance.

According to a third aspect, this application further provides a communication device. The communication device may include the antenna in any one of the foregoing possible implementation solutions. Because a weight and a size of the antenna are small, a weight and a size of the communication device are also reduced.

### BRIEF DESCRIPTION OF DRAWINGS

FIG. 1 is an example diagram of a system architecture to which an embodiment of this application is applicable;
FIG. 2 is a diagram of a structure of an antenna feeding system of a base station;
FIG. 3 is a diagram of composition of an antenna according to a possible embodiment of this application;
FIG. 4 is a bottom view of a partial structure of an antenna according to an embodiment of this application;
FIG. 5 is a side view of a partial structure of the antenna shown in FIG. 4;
FIG. 6 is a bottom view of a partial structure of another antenna according to an embodiment of this application;
FIG. 7 is a front view of a partial structure of the antenna shown in FIG. 6;
FIG. 8 is a side view of a partial structure of the antenna shown in FIG. 6;
FIG. 9 is another side view of a partial structure of the antenna shown in FIG. 6;
FIG. 10 is a bottom view of a partial structure of another antenna according to an embodiment of this application;
FIG. 11 is a bottom view of a partial structure of another antenna according to an embodiment of this application;
FIG. 12 is a side view of a partial structure of the antenna shown in FIG. 11;
FIG. 13 is a bottom view of a partial structure of another antenna according to an embodiment of this application;
FIG. 14 is a bottom view of a partial structure of another antenna according to an embodiment of this application;
FIG. 15 is a side view of a partial structure of the antenna shown in FIG. 14;
FIG. 16 is a bottom view of a partial structure of another antenna according to an embodiment of this application;
FIG. 17 is a bottom view of a partial structure of another antenna according to an embodiment of this application;
FIG. 18 is a side view of a partial structure of the antenna shown in FIG. 14;
FIG. 19 is a side view of a partial structure of another antenna according to an embodiment of this application;
FIG. 20 is a top view of a reflection plate of the antenna shown in FIG. 19;
FIG. 21 is a side view of a phase shifter of the antenna shown in FIG. 19;
FIG. 22 is a side view of a partial structure of another antenna according to an embodiment of this application;
FIG. 23 is a side view of a partial structure of another antenna according to an embodiment of this application;
FIG. 24 is a side view of a partial structure of another antenna according to an embodiment of this application;
FIG. 25 is a side view of a partial structure of another antenna according to an embodiment of this application; and
FIG. 26 is a side view of a partial structure of another antenna according to an embodiment of this application.

### Reference numerals:

1-antenna; 2-pole; 3-antenna adjustment bracket; 4-antenna cover; 5-radio frequency processing unit; 6-signal processing unit;
7-cable; 12-radiating element array; 13-reflection plate; 14-feeding network; 141-transmission component;
142-calibration network; 143-phase shifter; 144-combiner; 145-filter; 1431-phase shifter cavity;
14311-first side wall; 14312-second side wall; 14313-third side wall; 14314-fourth side wall;
14315-flange; 8-first fixture; 9-second fixture; 1301-groove; 14316-boss; 1302-hole; and
14317-spacer.

### DESCRIPTION OF EMBODIMENTS

To make the objectives, technical solutions, and advantages of this application clearer, the following further describes this application in detail with reference to the accompanying drawings.

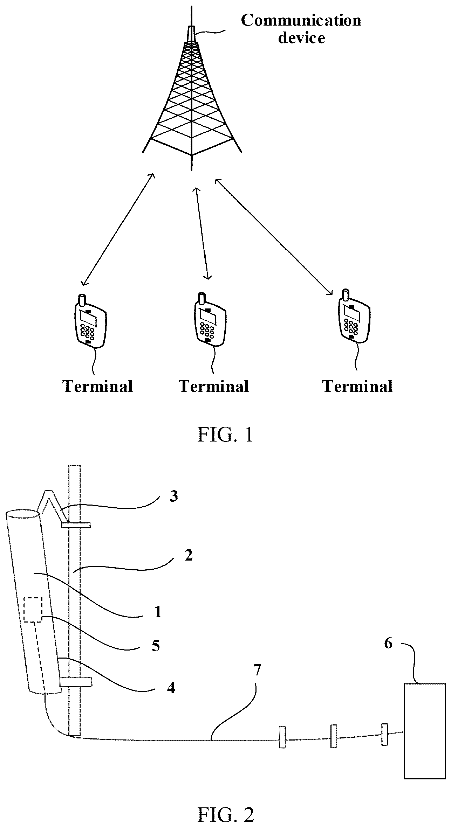

FIG. 1 is an example diagram of a system architecture to which an embodiment of this application is applicable. As shown in FIG. 1, the system architecture includes a communication device and a terminal in a radio access network, and wireless communication may be performed between the communication device and the terminal. The embodiment shown in FIG. 1 is described by using an example in which the communication device is a base station. The base station may be located in a base station subsystem (base station subsystem, BBS), a terrestrial radio access network (UMTS terrestrial radio access network, UTRAN), or an evolved terrestrial radio access network (evolved universal terrestrial radio access, E-UTRAN), and is configured to perform cell coverage of a radio signal, to implement connection between a terminal device and a wireless network radio frequency end. Specifically, the base station may be a base transceiver station (base transceiver station, BTS) in a GSM or CDMA system, may be a NodeB (NodeB, NB) in a WCDMA system, may be an evolved NodeB (evolved NodeB, eNB or eNodeB) in a long term evolution (long term evolution, LTE) system, or may be a radio controller in a cloud radio access network (cloud radio access network, CRAN) scenario. Alternatively, the base station may be a relay station, an access point, an in-vehicle device, a wearable device, a gNodeB in a 5G network, a base station in a future evolved public land mobile network (public land mobile network, PLMN), or the like, for example, a new radio gNodeB. This is not limited in this embodiment of this application.

FIG. 2 is a diagram of a structure of an antenna feeding system of a base station. The antenna feeding system may usually include structures such as an antenna 1, a pole 2, and an antenna adjustment bracket 3. The antenna 1 includes an antenna cover 4. The antenna cover 4 has a good electromagnetic wave penetration characteristic in terms of electrical performance, and can withstand impact of a harsh external environment in terms of mechanical performance, and therefore can protect an antenna system from being affected by the external environment. The antenna cover 4 may be installed on the pole 2 or a tower by using the antenna adjustment bracket 3, to facilitate signal receiving or transmitting of the antenna 1.

In addition, the base station may further include a radio frequency processing unit 5 and a signal processing unit 6. The radio frequency processing unit 5 may be configured to perform frequency selection, amplification, and frequency conversion processing on a signal received by the antenna 1, convert the signal into an intermediate frequency signal or a baseband signal, and send the intermediate frequency signal or the baseband signal to the signal processing unit 6. Alternatively, the radio frequency processing unit 5 is configured to perform up-conversion and amplification processing on an intermediate frequency signal of the signal processing unit 6, convert a processed signal into an electromagnetic wave by using the antenna 1 for sending. The signal processing unit 6 may be connected to a feeding structure of the antenna 1 by using the radio frequency processing unit 5, and is configured to process an intermediate frequency signal or a baseband signal sent by the radio frequency processing unit 5.

In some embodiments, the radio frequency processing unit 5 may be integrally disposed with the antenna 1, and the signal processing unit 6 is located at a remote end of the antenna 1. In some other embodiments, the radio frequency processing unit 5 and the signal processing unit 6 may alternatively be simultaneously located at the remote end of the antenna 1. The radio frequency processing unit 5 and the signal processing unit 6 may be connected by using a cable 7.

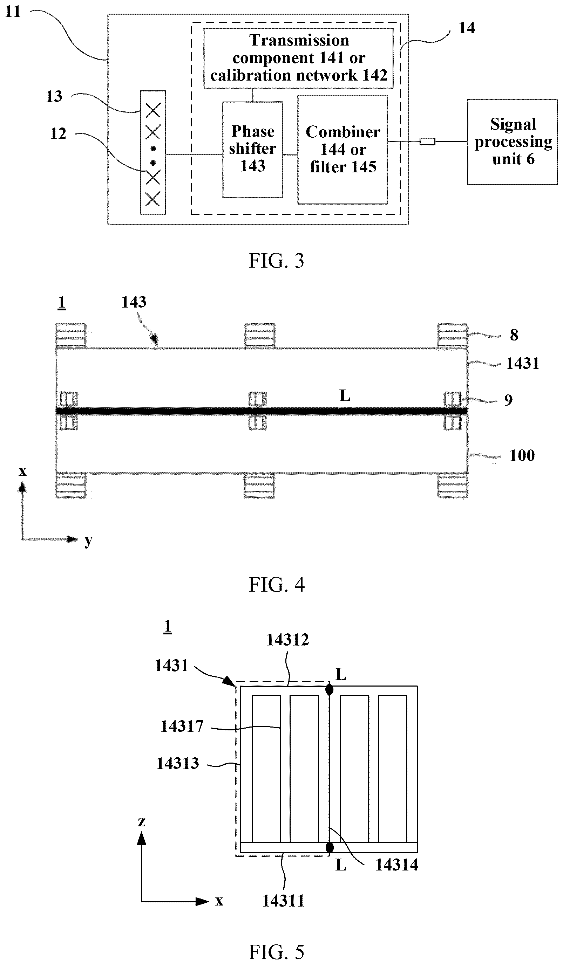

More specifically, refer to FIG. 2 and FIG. 3 together. FIG. 3 is a diagram of composition of an antenna according to a possible embodiment of this application. As shown in FIG. 3, the antenna 1 may include a radiating element array 12 and a reflection plate 13. The radiating element array 12 may also be referred to as an antenna element, an element, or the like, and can effectively send or receive an antenna signal. In the antenna 1, frequencies of different radiating element arrays 12 may be the same or different. The reflection plate 13 may also be referred to as a base plate, an antenna panel, a reflection surface, or the like, and may be made of a metal material. When the antenna 1 receives a signal, the reflection plate 13 may reflect and aggregate antenna signals at a reception point; and when the antenna 1 transmits a signal, the reflection plate 13 reflects and transmits a signal transmitted to the reflection plate 13. The radiating element array 12 is usually placed on a surface on one side of the reflection plate 13, which not only can greatly enhance a signal receiving or transmitting capability of the antenna 1, but also can block and shield interference caused to antenna signal receiving by another electromagnetic wave from a back surface of the reflection plate 13 (in this application, the back surface of the reflection plate 13 is a side opposite to a side that is of the reflection plate 13 and that is used to dispose the radiating element array 12).

In the antenna 1 of the base station, the radiating element array 12 is connected to a feeding network 14. The feeding network 14 usually includes a controlled impedance transmission line. The feeding network 14 may feed a signal to the radiating element array 12 based on a specific amplitude and phase, or send a received signal to the signal processing unit 6 of the base station based on a specific amplitude and phase. Specifically, in some implementations, the feeding network 14 may implement different radiation beam directions by using a transmission component 141, or may be connected to a calibration network 142 to obtain a calibration signal required by the system. The feeding network 14 may include a phase shifter 143 to change amplitude and phase distribution of different radiating element arrays, to implement specific antenna radiation performance. Some modules used for performance extension may be further disposed in the feeding network 14. For example, a combiner 144 is disposed, which may be configured to combine signals of different frequencies into one signal and transmit the signal by using the antenna 1; or during reverse use, the combiner 144 may be configured to divide, based on different frequencies, a signal received by the antenna 1 into a plurality of signals and transmit the signals to the signal processing unit 6 for processing. For another example, a filter 145 is disposed, which is configured to filter out an interference signal.

As a core part of the feeding network, the phase shifter 143 is usually disposed on the back surface of the reflection plate 13, that is, a surface that is of the reflection plate 13 and that is opposite to a surface on which the radiating element array 12 is located. The phase shifter 143 may include a phase shifter cavity and a phase shift circuit. The phase shift circuit may be specifically a circuit board or a sheet metal strip, and is mainly configured to implement the foregoing function of adjusting and controlling a phase of the radiating element array. The phase shifter cavity may be configured to accommodate and protect the phase shift circuit. The phase shifter cavity may be made of a metal material. For example, a material of the phase shifter cavity may be the same as a material of the reflection plate 13. The phase shifter cavity is usually fastened on the reflection plate 13 through a mechanical connection, for example, a screw connection. The mechanical connection requires specific material redundancy to ensure sufficient connection space. Consequently, there is an increase in a design difficulty in miniaturization of the antenna. In addition, as the antenna has increasingly more working frequency bands, a quantity of phase shifters integrated on the reflection plate also increases gradually, which further increases a size and a weight of the antenna.

In addition, in a process in which the antenna is in service, in one aspect, the screw connection is in a risk of becoming loose and faulty; and in another aspect, a passive intermodulation indicator may deteriorate. Passive intermodulation (passive intermodulation, PIM) is also referred to as passive intermodulation, intermodulation distortion, or the like. Passive intermodulation means that two or more signals of different frequencies are mixed together in a non-linear device to generate a spurious signal. When the spurious signal falls within a receiving frequency band of the radiating element array 12, interference is caused to signal receiving, and system communication quality is reduced. Factors that cause passive intermodulation are complex. For example, passive intermodulation may occur at a connection point or an interface of any two different metals. Therefore, when the phase shifter cavity and the reflection plate are connected through the screw connection in the antenna, passive intermodulation is inevitably caused, affecting communication quality of the antenna.

In view of this, embodiments of this application provide an antenna that can reduce a weight and a size and can optimize a passive intermodulation indicator. The following further describes this application in detail with reference to the accompanying drawings and specific embodiments.

FIG. 4 is a bottom view of a partial structure of an antenna according to an embodiment of this application, and FIG. 5 is a side view of a partial structure of the antenna shown in FIG. 4. Refer to FIG. 4 and FIG. 5. In this embodiment of this application, the antenna 1 may include a plurality of phase shifters 143, and the plurality of phase shifters 143 may be disposed in an array. FIG. 4 and FIG. 5 show only an example case including two phase shifters 143. It should be noted that, a quantity of phase shifters 143 shown in FIG. 4, FIG. 5, and the following accompanying drawings are merely used for description, and does not constitute a limitation on an actual quantity of phase shifters 143 in the antenna 1. In addition, FIG. 4, FIG. 5, and the following related accompanying drawings show only some example components included in the antenna. Although not shown in the figures, the antenna may further include components such as an antenna cover and a radiating element. Details are not described herein.

A phase shifter cavity 1431 may be approximately in a shape of a hexahedron, and includes a first side wall 14311, a second side wall 14312, a third side wall 14313, and a fourth side wall 14314. The first side wall 14311 and the second side wall 14312 may be disposed opposite to each other in a height direction (a z direction) of the phase shifter cavity 1431, and the third side wall 14313 and the fourth side wall 14314 may be disposed opposite to each other in a width direction (a y direction) of the phase shifter cavity 1431. In addition, the third side wall 14313 and the fourth side wall 14314 are separately connected between the first side wall 14311 and the second side wall 14312. For example, when the antenna in this embodiment is a dual-polarized antenna, a spacer 14317 may be further disposed inside the phase shifter cavity. The spacer 14317 may be disposed in parallel with the third side wall 14313 and the fourth side wall 14314, and two ends of the spacer 14317 are respectively connected to the first side wall 14311 and the second side wall 14312, to divide the inside of the phase shifter cavity 1431 into two sub-cavities. A phase shift circuit may be disposed in each of the two sub-cavities, and the two phase shift circuits may be respectively configured to adjust and control phases of radiating element arrays in two different polarization directions.

During specific implementation, in two adjacent phase shifter cavities 1431, side walls that are respectively disposed toward each other are fixedly connected. For example, in the embodiment shown in FIG. 5, the fourth side wall 14314 of the phase shifter cavity 1431 on a left side may be fixedly connected to the third side wall 14313 of the phase shifter cavity 1431 on a right side. During specific implementation, adjacent phase shifter cavities 1431 may be connected through welding, a weld L extends in a length direction (a y direction) of the phase shifter cavity 1431, and the weld L may be disposed along an edge of a side wall of the phase shifter cavity 1431. It should be noted that black bold parts in FIG. 4, FIG. 5, and the following accompanying drawings are all used to represent locations of welds, and do not constitute a limitation on an actual length and a thickness of the weld. In this case, first side walls 14311 of adjacent phase shifter cavities 1431 may be fused together as a whole through the weld L. For the antenna 1 as a whole, a fused structure of first side walls 14311 of the plurality of phase shifter cavities 1431 may form a reflection plate of the antenna 1. In this way, no separate reflection plate needs to be additionally disposed, and a connection screw between the phase shifter cavity 1431 and the reflection plate can be omitted, so that not only a weight and a size of the antenna 1 can be reduced, but also a passive intermodulation indicator of the antenna 1 can be optimized.

It should be noted that, when the phase shifter cavity 1431 is welded, each phase shifter cavity 1431 may be first positioned by using a fixture, to reduce a process difficulty in a welding process, and help improve overall structural precision of the antenna 1. For example, in an arrangement direction of the phase shifter cavities 1431, that is, in the x direction in FIG. 4, a first fixture 8 may be used to separately limit an upper lower phase shifter cavity and a lower phase shifter cavity on two sides of the phase shifter cavities 1431; and in a vertical direction, that is, in the z direction in FIG. 5, a second fixture 9 may be used to limit each the phase shifter cavity 1431.

In some embodiments, the weld L between adjacent phase shifter cavities 1431 may be continuously disposed along side wall edges of the phase shifter cavities 1431, that is, a continuous weld is formed. During welding, a continuous weld may be formed in a continuous welding manner, or a plurality of segmented welds may be sequentially welded along a side wall edge of the phase shifter cavity 1431 in a segmented welding manner, and an overlapping region exists between adjacent segmented welds. In this way, a continuous weld may also be formed between adjacent phase shifter cavities 1431. During specific implementation, a length of a segmented weld may range from 0.2 mm to 1000 mm, and a length of an overlapping region between adjacent segmented welds may range from 0.1 mm to 500 mm. The overlapping length may ensure consistency of a continuous weld. It should be understood that, the length of the overlapping region between the adjacent segmented welds is less than the length of the segmented weld. For example, the length of the segmented weld may be 0.2 mm, 100 mm, 1000 mm, 1500 mm, 2000 mm, or the like; and the length of the overlapping region may be 0.1 mm, 100 mm, 400 mm, 500 mm, or the like.

In some other embodiments, when a segmented welding manner is used between the phase shifter cavities 1431, adjacent segmented welds may alternatively be disposed at an interval, and a gap between any two adjacent segmented welds may range from 0.1 mm to 500 mm. Through this design, a welding process difficulty may be reduced while reliability of connection between the phase shifter cavities 1431 is ensured, thereby improving antenna production efficiency. For example, a gap between two adjacent segmented welds may be 0.1 mm, 100 mm, 400 mm, 500 mm, or the like.

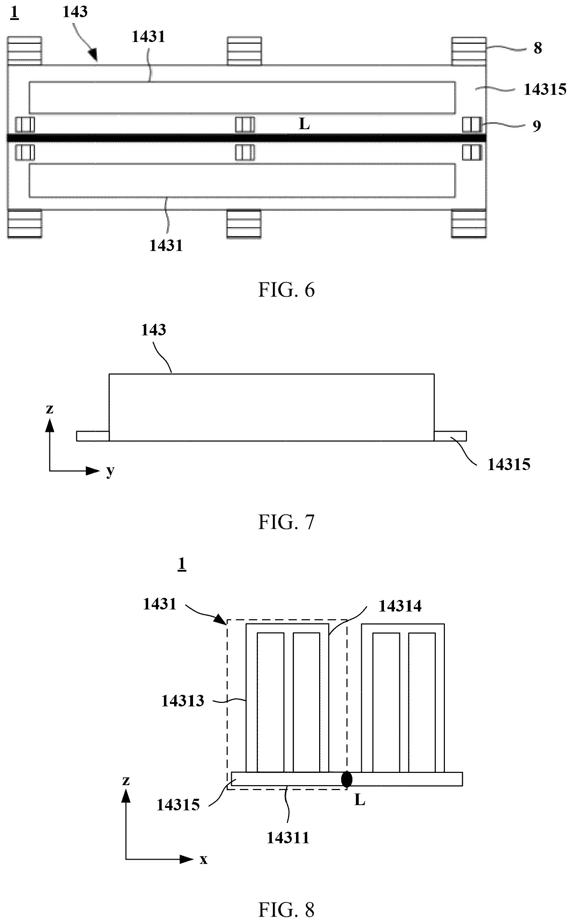

FIG. 6 is a bottom view of a partial structure of another antenna according to an embodiment of this application, FIG. 7 is a front view of a partial structure of the antenna shown in FIG. 6, and FIG. 8 is a side view of a partial structure of the antenna shown in FIG. 6. Refer to FIG. 6, FIG. 7, and FIG. 8. In this embodiment, a flange 14315 may be further disposed on an outer wall of the phase shifter cavity, and the flange 14315 may be specifically disposed around the first side wall 14311. To be specific, the flange 14315 may be disposed on an outer peripheral side of the first side wall 14311, and the flange 14315 may be continuously disposed around the outer peripheral side of the first side wall 14311, that is, the flange 14315 may be an annular structure disposed on the outer peripheral side of the first side wall 14311. During specific implementation, the flange 14315 and the phase shifter cavity 1431 may be of an integrally formed structure, or may be formed through machine processing. This is not limited in this application. For example, a surface on a side that is of the flange 14315 and that is away from the inside of the phase shifter cavity 1431 may be disposed coplanar with an outer wall of the first side wall 14311.

In this embodiment, flanges 14315 of adjacent phase shifter cavities 1431 may be connected through welding. For example, in the embodiment shown in FIG. 8, the flange 14315 on one side of the fourth side wall 14314 of the phase shifter cavity 1431 on a left side may be welded to the flange 14315 on one side of the third side wall 14313 of the phase shifter cavity 1431 on a right side. During specific implementation, the flange 14315 of the phase shifter cavity 1431 may be welded through butting, that is, flanges 14315 of adjacent phase shifter cavities 1431 may be disposed opposite to each other. A weld L may penetrate a thickness direction of the flange 14315, to ensure strength of connection between the two phase shifter cavities 1431. In this case, the flanges 14315 of the adjacent phase shifter cavities 1431 may be fused as a whole through the weld L, so that the first side walls 14311 of the adjacent phase shifter cavities 1431 are also connected as a whole through the flanges 14315. For the antenna 1 as a whole, a fused structure of flanges 14315 of the plurality of phase shifter cavities 1431 and the first side wall 14311 may form the reflection plate of the antenna 1. In this way, no separate reflection plate needs to be additionally disposed, and a connection screw between the phase shifter cavity 1431 and the reflection plate can be omitted, so that not only a weight and a size of the antenna 1 can be reduced, but also a passive intermodulation indicator of the antenna 1 can be optimized.

Similarly, when the phase shifter cavity 1431 is welded, each phase shifter cavity 1431 may be positioned by using a fixture. During specific implementation, in the x direction, the first fixture 8 may be used to limit an upper lower phase shifter cavity 1431 and a lower phase shifter cavity 1431 on two sides of flanges 14315 of the phase shifter cavities 1431; and in the z direction, the second fixture 9 may be used to limit each phase shifter cavity 1431.

In some embodiments, the weld L between adjacent phase shifter cavities 1431 may be continuously disposed along an extension direction of the flange 14315, that is, a continuous weld is formed. During welding, a continuous weld may be formed in a continuous welding manner, or a plurality of segmented welds may be sequentially formed through welding along the flange 14315 of the phase shifter cavity 1431, and an overlapping region exists between adjacent segmented welds. During specific implementation, a length of a segmented weld may range from 0.2 mm to 1000 mm, and a length of an overlapping region between adjacent segmented welds may range from 0.1 mm to 500 mm. The overlapping length may ensure consistency of a continuous weld. For example, the length of the segmented weld may be 0.2 mm, 100 mm, 1000 mm, 1500 mm, 2000 mm, or the like; and the length of the overlapping region may be 0.1 mm, 100 mm, 400 mm, 500 mm, or the like.

In some other embodiments, when a segmented welding manner is used between the phase shifter cavities 1431, adjacent segmented welds may alternatively be disposed at an interval, and a gap between any two adjacent segmented welds may range from 0.1 mm to 500 mm. For example, a gap between two adjacent segmented welds may be 0.1 mm, 100 mm, 400 mm, 500 mm, or the like.

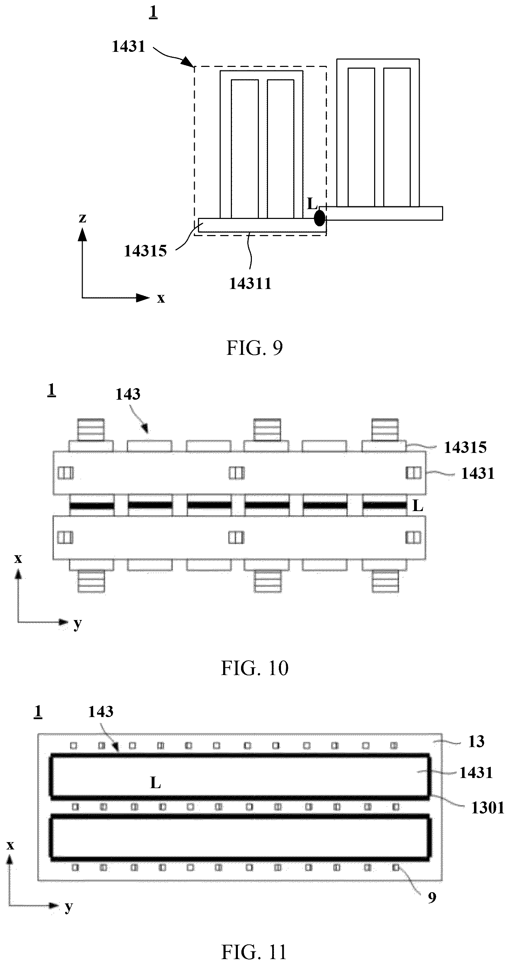

FIG. 9 is another side view of a partial structure of the antenna shown in FIG. 6. Refer to FIG. 6 and FIG. 9. In this embodiment, the flange 14315 of the phase shifter cavity 1431 may alternatively be welded through lapping, that is, flanges 14315 of adjacent phase shifter cavities 1431 may be disposed in a staggered manner. For example, the flange 14315 of the phase shifter cavity 1431 on the right side may be lapped above the flange 14315 of the phase shifter cavity 1431 on the left side. In this case, a weld L may be formed at a location at which the flanges 14315 of the left and right phase shifter cavities 1431 are lapped. During specific implementation, the formed weld L may be a continuous weld or may be a segmented weld. For details, refer to the disposing manner in the foregoing embodiment. Details are not described herein again.

FIG. 10 is a bottom view of a partial structure of another antenna according to an embodiment of this application. Refer to FIG. 10. In this embodiment of this application, the flange 14315 may alternatively be arranged on the outer peripheral side of the first side wall in a segmented manner. In this case, there may be a plurality of flanges 14315, and the plurality of flanges 14315 are disposed at an interval along the outer peripheral side of the first side wall. When adjacent phase shifter cavities 1431 are fixedly connected, each flange 14315 on a side that is of an upper phase shifter cavity 1431 and that faces a lower phase shifter cavity 1431 may be correspondingly welded to each flange 14315 on a corresponding side of the lower phase shifter cavity 1431, and the flanges 14315 of the two phase shifter cavities 1431 may be welded through butting, or may be welded through lapping. A formed weld L may be a continuous weld or may be a segmented weld. For details, refer to the disposing manner in the foregoing embodiment. Details are not described herein again.

In the antenna 1 in the foregoing embodiments, without changing other configurations, the first side wall of each phase shifter cavity and a fused structure of the flanges are used as the reflection plate, and a connection screw between the phase shifter cavity and the reflection plate is removed, so that a passive intermodulation indicator of the antenna can be improved, and a weight and a size of the antenna can be reduced. For example, the passive intermodulation indicator of the antenna may be reduced from -115 dB in the conventional technology to about -121 dB, the weight may be reduced from 78 kg to about 73 kg, and a width of the antenna may also be reduced from 499 mm to about 459 mm.

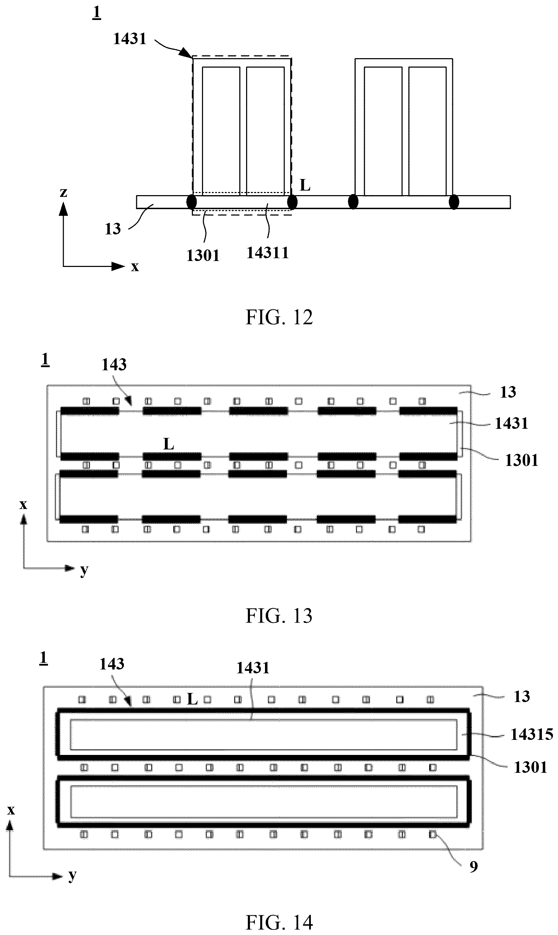

FIG. 11 is a bottom view of a partial structure of another antenna according to an embodiment of this application, and FIG. 12 is a side view of a partial structure of the antenna shown in FIG. 11. Refer to FIG. 11 and FIG. 12 together. In this embodiment of this application, the antenna 1 may further include the reflection plate 13. A plurality of grooves 1301 are provided on the reflection plate 13. The grooves 1301 are disposed in one-to-one correspondence with the phase shifter cavities 1431. A projection of the phase shifter cavities 1431 on a surface of the reflection plate 13 may cover the corresponding groove 1301. In other words, a region in which the groove 1301 is located a projection region of the phase shifter cavity 1431 on the surface of the reflection plate 13.

In this embodiment, the phase shifter cavity 1431 may be fastened in the corresponding groove 1301, the phase shifter cavity 1431 may be in a structure form without a flange, and a cross-sectional area of the groove 1301 may be approximately equal to a cross-sectional area of the phase shifter cavity 1431. The side wall of the phase shifter cavity 1431 may be connected to an inner wall of the groove 1301 through welding. For example, in embodiments shown in FIG. 10 and FIG. 11, the outer peripheral side of the first side wall 14311 of the phase shifter cavity 1431 may be welded to the inner wall of the groove 1301. In this case, the first side wall 14311 may form a part of the reflection plate 13. During specific implementation, a weld L may penetrate a thickness direction of the reflection plate 13, to ensure reliability of connection between the phase shifter cavity 1431 and the reflection plate 13.

When the phase shifter cavity 1431 is welded to the reflection plate 13, in the x direction, the phase shifter cavity 1431 may be limited by the inner wall of the groove 1301, and in the z direction, each phase shifter cavity 1431 may still be limited by using the second fixture 9, to improve structural precision of the antenna 1.

In some embodiments, the weld L between the phase shifter cavity 1431 and the reflection plate 13 may be continuously disposed along the side wall edge of the phase shifter cavity 1431, that is, a continuous weld is formed. During welding, a continuous weld may be formed in a continuous welding manner, or a plurality of segmented welds may be sequentially formed through welding along the side wall edge of the phase shifter cavity 1431 in a segmented welding manner, and an overlapping region exists between adjacent segmented welds. In this way, a continuous weld may also be formed between the phase shifter cavity 1431 and the reflection plate 13. During specific implementation, a length of a segmented weld may range from 0.2 mm to 1000 mm, and a length of an overlapping region between adjacent segmented welds may range from 0.1 mm to 500 mm. The overlapping length may ensure consistency of a continuous weld. For example, the length of the segmented weld may be 0.2 mm, 100 mm, 1000 mm, 1500 mm, 2000 mm, or the like; and the length of the overlapping region may be 0.1 mm, 100 mm, 400 mm, 500 mm, or the like.

In some other embodiments, when a segmented welding manner is used between the phase shifter cavity 1431 and the reflection plate 13, adjacent segmented welds may alternatively be disposed at an interval, and a gap between any two adjacent segmented welds may range from 0.1 mm to 500 mm. For example, a gap between two adjacent segmented welds may be 0.1 mm, 100 mm, 400 mm, 500 mm, or the like.

FIG. 13 is a bottom view of a partial structure of another antenna according to an embodiment of this application. Refer to FIG. 13. In this embodiment, in the y direction, a length of the groove 1301 may be slightly greater than a length of the phase shifter cavity 1431. When the phase shifter cavity 1431 is placed in the groove 1301, a specific gap may be formed between at least one end of the phase shifter cavity 1431 and an inner wall on a corresponding side of the groove 1301, thereby reducing a risk of interference between the phase shifter cavity 1431 and the reflection plate 13 caused by an excessively small groove 1301, and helping improve efficiency of assembling the phase shifter cavity 1431 and the reflection plate 13. A gap between an end of the phase shifter cavity 1431 and an inner wall on a corresponding side of the groove 1301 may range from 0.1 mm to 50 mm. For example, the gap may be specifically 0.1 mm, 10 mm, 40 mm, 50 mm, or the like.

When the phase shifter cavity 1431 is welded to the reflection plate 13, two opposite sides of the first side wall of the phase shifter cavity 1431 in the x direction may be separately welded to the inner wall of the groove 1301, to form, on each of two sides of the phase shifter cavity, a weld L extending in the y direction. During specific implementation, the formed weld may be a segmented weld disposed at an interval shown in FIG. 12, or may be a continuous weld. For details, refer to the disposing manner in the foregoing embodiment. Details are not described herein again.

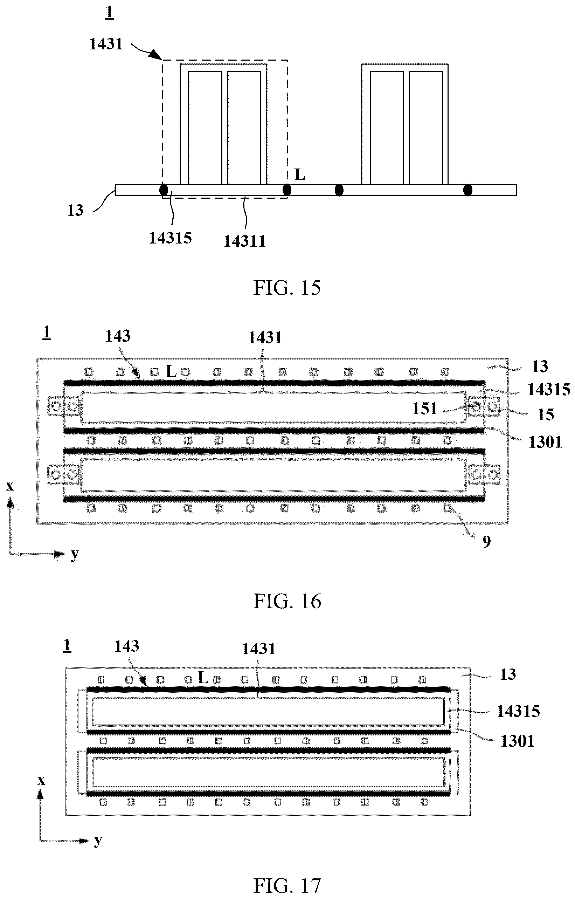

FIG. 14 is a bottom view of a partial structure of another antenna according to an embodiment of this application, and FIG. 15 is a side view of a partial structure of the antenna shown in FIG. 14. Refer to FIG. 14 and FIG. 15 together. In this embodiment, a structure of the reflection plate may be similar to that in the foregoing embodiment. A difference is that the phase shifter cavity 1431 in this embodiment may be in a structure form with the flange 14315. The flange 14315 may be an annular flange that is continuously disposed, or may be a segmented flange that is disposed at an interval. This is not limited in this application. The embodiment shown in FIG. 13 is described by using an annular flange as an example.

During specific implementation, the flange 14315 may be located in the groove 1301 of the reflection plate 13, and an outer peripheral side of the flange 14315 may be welded to the inner wall of the groove 1301 through butting. In this case, the first side wall 14311 and the flange 14315 may form a part of the reflection plate 13. A weld L between the flange 14315 and the reflection plate 13 may penetrate the thickness direction of the reflection plate 13, to ensure reliability of connection between the phase shifter cavity 1431 and the reflection plate 13. It should be noted that, when the phase shifter cavity 1431 is welded to the reflection plate 13, in the x direction, the phase shifter cavity 1431 may be limited by the inner wall of the groove 1301, and in the z direction, each phase shifter cavity 1431 may still be limited by using the second fixture 9, to improve structural precision of the antenna 1.

In some embodiments, the cross-sectional area of the groove 1301 may be approximately equal to a cross-sectional area of the outer peripheral side of the flange 14315. In this case, a periphery of the flange 14315 may be separately welded to inner walls on corresponding sides of the groove 1301, and the weld L may be disposed in an annular manner along a peripheral side of the flange 14315. The flange 14315 and the inner wall of the groove 1301 may form a continuous weld in a continuous welding manner, or may form a segmented weld in a segmented welding manner, and adjacent segmented welds may be disposed in an overlapping manner or disposed at an interval.

FIG. 16 is a bottom view of a partial structure of another antenna according to an embodiment of this application. Refer to FIG. 16. In this embodiment, on two opposite sides of the phase shifter cavity 1431 in the x direction, flanges 14315 on the two sides may be separately welded to the inner wall of the groove 1301, to form, on each of the two sides of the phase shifter cavity 1431, a weld extending in the y direction, to fasten the phase shifter cavity 1431 and the reflection plate 13 relative to each other. On two opposite sides of the phase shifter cavity 1431 in the y direction, the flange 14315 may not be connected to the reflection plate 13, or flanges 14315 on the two sides may be separately connected to the reflection plate 13 by using a connecting piece 15. For example, when the flange 14315 is connected to the reflection plate 13 by using the connecting piece 15, one end of the connecting piece 15 may be in contact with the reflection plate 13, and the other end may be in contact with the flange 14315. The connecting piece 15 may be separately fixedly connected to the reflection plate 13 and the flange 14315 through a screw 151.

FIG. 17 is a bottom view of a partial structure of another antenna according to an embodiment of this application. Refer to FIG. 17. In this embodiment, a length of the groove 1301 in the y direction may be slightly greater than a length of the outer peripheral side of the flange 14315 in the y direction. When the phase shifter cavity 1431 is placed in the groove 1301, a specific gap may be formed between at least one end of the flange 14315 and the inner wall of the groove 1301, thereby reducing a risk of interference between the flange 14315 and the reflection plate 13 caused by an excessively small groove 1301. A gap between an end of the flange 14315 and an inner wall on a corresponding side of the groove 1301 may range from 0.1 mm to 50 mm. For example, the gap may be specifically 0.1 mm, 10 mm, 40 mm, 50 mm, or the like.

When the phase shifter cavity 1431 is welded to the reflection plate 13, flanges 14315 on two opposite sides of the phase shifter cavity 1431 in the x direction may be separately welded to the inner wall of the groove 1301, to form, on each of the two sides of the phase shifter cavity 1431, a weld extending in the y direction. On two opposite sides of the phase shifter cavity 1431 in the y direction, the flange 14315 may not be connected to the reflection plate 13, or flanges 14315 on the two sides may be separately connected to the reflection plate 13 by using a connecting piece. For a specific connection manner, refer to the foregoing embodiment. Details are not described herein again.

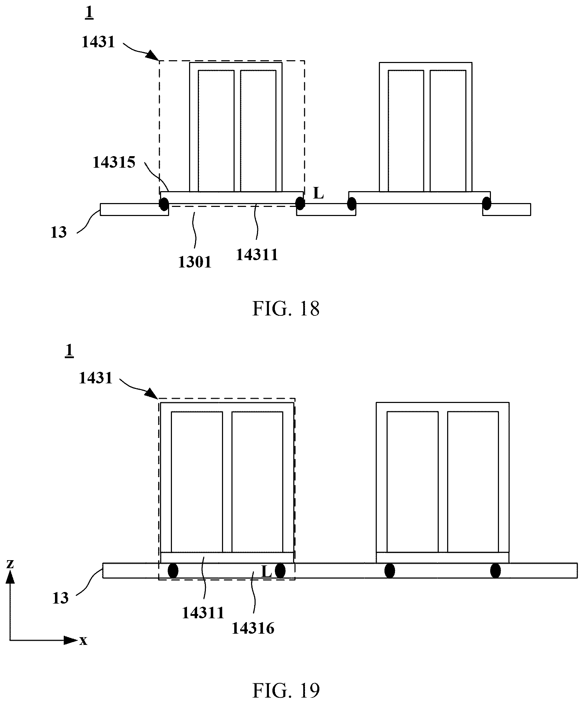

FIG. 18 is a side view of a partial structure of the antenna shown in FIG. 14. Refer to FIG. 14 and FIG. 18 together. In this embodiment, the flange 14315 of the phase shifter cavity 1431 may alternatively be connected to the reflection plate 13 through lapping. The phase shifter cavity 1431 is disposed on a back surface of the reflection plate 13, the first side wall 14311 of the phase shifter cavity 1431 may cover the corresponding groove 1301, and a surface on a side that is of the flange 14315 and that is away from the inside of the phase shifter cavity 1431 is lapped to the back surface of the reflection plate 13. In this case, the flange 14315 and the reflection plate 13 may be connected through welding or may be connected through a screw at a lapping location. When the flange 14315 and the reflection plate 13 are connected through welding, a weld formed between the flange 14315 and the reflection plate 13 may be a continuous weld or may be a segmented weld. For details, refer to the disposing manner in the foregoing embodiment. Details are not described herein again.

For the antenna 1 in the foregoing embodiments, without changing other configurations, the groove 1301 is provided on the reflection plate 13, and a quantity of screws between the phase shifter cavity 1431 and the reflection plate 13 is reduced or the screws are completely removed, so that a passive intermodulation indicator of the antenna can be improved, and a weight and a size of the antenna can be reduced. For example, the passive intermodulation indicator of the antenna may be reduced from -115 dB in the conventional technology to about -121 dB, the weight may be reduced from 78 kg to about 75 kg, and a width of the antenna may also be reduced from 499 mm to about 459 mm.

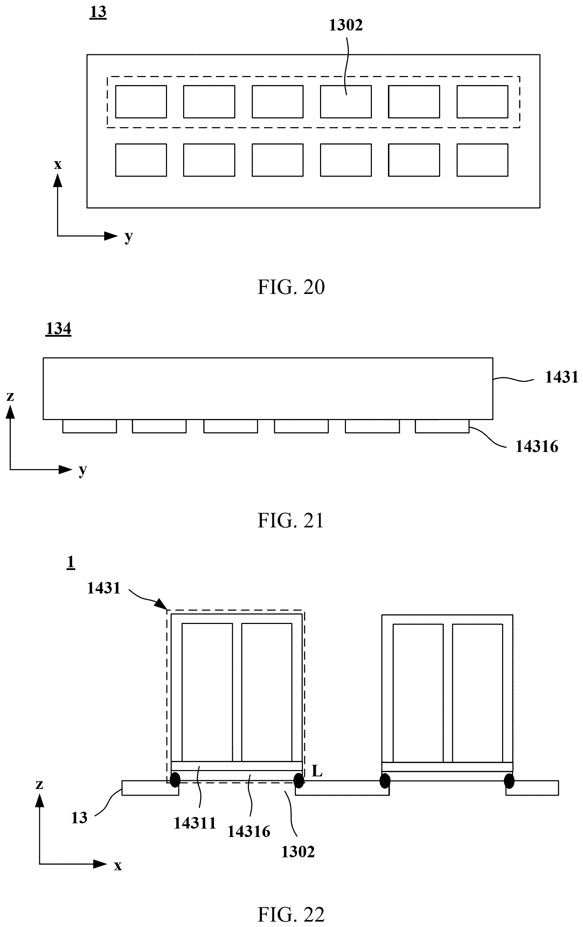

FIG. 19 is a side view of a partial structure of another antenna according to an embodiment of this application, FIG. 20 is a top view of a reflection plate of the antenna shown in FIG. 19, and FIG. 21 is a side view of a phase shifter of the antenna shown in FIG. 19. Refer to FIG. 18, FIG. 19, and FIG. 20 together. In this embodiment, a plurality of groups of holes may be provided on the reflection plate 13, and each group of holes corresponds to one phase shifter cavity 1431. The phase shifter cavity 1431 is disposed on a back surface of the reflection plate 13. A plurality of bosses 14316 may be disposed on the first side wall 14311 of the phase shifter cavity 1431. The plurality of bosses 14316 may be arranged in the x direction. A quantity of bosses 14316 may be the same as a quantity of holes 1302 in each group of holes on the reflection plate 13. A projection of each boss 14316 on a surface of the reflection plate 13 may cover each hole 1302 in the corresponding group of holes.

In this embodiment, each boss 14316 may be fastened in each hole 1302 in the corresponding group of holes. In this case, the boss 14316 may form a part of the reflection plate 13. A cross-sectional area of the hole 1302 may be approximately equal to a cross-sectional area of the boss 14316, a side wall of the boss 14316 may be connected to an inner wall of the hole 1302 through welding, and a weld L may penetrate a thickness direction of the reflection plate 13. During welding, a continuous weld may be formed in a continuous welding manner, or a plurality of segmented welds may be sequentially formed through welding along an edge of the boss 14316 in a segmented welding manner, and an overlapping region exists between adjacent segmented welds. In this way, a continuous weld may also be formed between the phase shifter cavity 1431 and the reflection plate 13. During specific implementation, a length of a segmented weld may range from 0.2 mm to 1000 mm, and a length of an overlapping region between adjacent segmented welds may range from 0.1 mm to 500 mm. The overlapping length may ensure consistency of a continuous weld. For example, the length of the segmented weld may be 0.2 mm, 100 mm, 1000 mm, 1500 mm, 2000 mm, or the like; and the length of the overlapping region may be 0.1 mm, 100 mm, 400 mm, 500 mm, or the like.

In some possible embodiments, when a segmented welding manner is used between the phase shifter cavity 1431 and the reflection plate 13, adjacent segmented welds may alternatively be disposed at an interval, and a gap between any two adjacent segmented welds may range from 0.1 mm to 500 mm. For example, a gap between two adjacent segmented welds may be 0.1 mm, 100 mm, 400 mm, 500 mm, or the like.

It should be noted that, to improve reliability of connection between the phase shifter cavity 1431 and the reflection plate 13, in addition to welding the boss 14316 and the hole 1302, an edge of the first side wall 14311 of the phase shifter cavity 1431 and the back surface of the reflection plate 13 may also be fastened through welding, and a weld may be disposed in an annular manner along four side edges of the first side wall 14311, or may be distributed only on one side, two sides, or three sides of the first side wall 1431 1, which may be specifically disposed based on an actual situation. This is not limited in this application.

FIG. 22 is a side view of a partial structure of another antenna according to an embodiment of this application. Refer to FIG. 20, FIG. 21, and FIG. 22 together. In this embodiment, the boss 14316 of the phase shifter cavity 1431 and the reflection plate 13 may alternatively be welded through lapping. During specific implementation, a cross-sectional area of the hole 1302 may be less than a cross-sectional area of the boss 14316. In this way, when the phase shifter cavity 1431 is placed on a back surface of the reflection plate 13, the boss 14316 may cover the corresponding hole 1302, a surface on a side that is of the boss 14316 and that is away from the inside of the phase shifter cavity 1431 is lapped to the back surface of the reflection plate 13, and the boss 14316 and the reflection plate 13 are fastened through welding at a lapping location. Similarly, a weld L formed between the boss 14316 and the reflection plate 13 may be a continuous weld or may be a segmented weld. For details, refer to the disposing manner in the foregoing embodiment. Details are not described herein again.

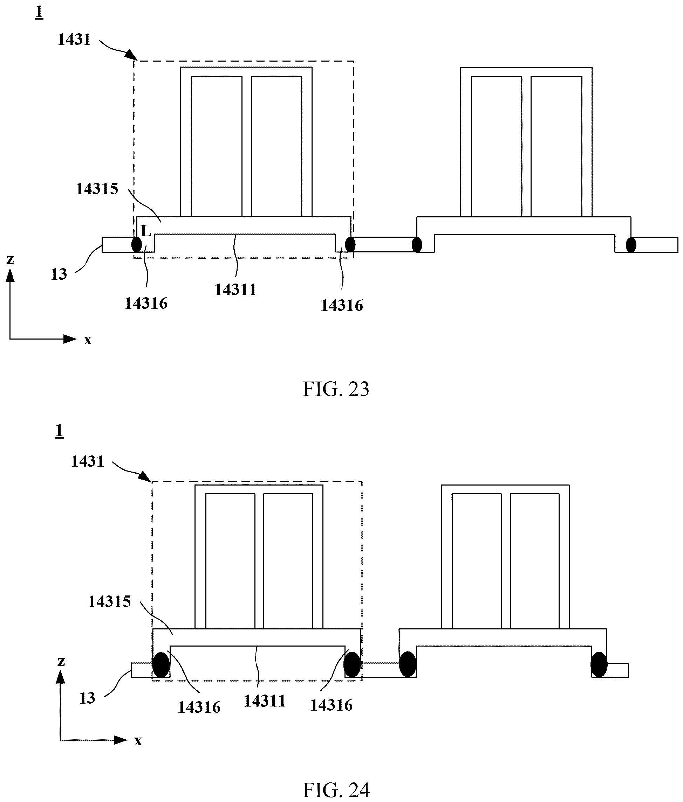

FIG. 23 is a side view of a partial structure of another antenna according to an embodiment of this application. Refer to FIG. 20 and FIG. 23 together. In this embodiment, a structure of the reflection plate 13 may be similar to that in the foregoing embodiment. A difference is that the phase shifter cavity 1431 in this embodiment may be in a structure form with the flange 14315. The flange 14315 may be an annular flange that is continuously disposed, or may be a segmented flange that is disposed at an interval. This is not limited in this application. The embodiment shown in FIG. 22 is described by using an annular flange as an example.

During specific implementation, a plurality of groups of bosses may be disposed on the surface on the side that is of the flange 14315 and that is away from the inside of the phase shifter cavity 1431, the plurality of groups of bosses may be arranged in the y direction, and the groups of bosses may be disposed in one-to-one correspondence with holes 1302 in a group of holes, on the reflection plate 13, that corresponds to the phase shifter cavity 1431. In FIG. 22, each group of bosses includes two bosses 14316. The two bosses 14316 in each group of bosses may be respectively disposed on two opposite sides of the flange 14315 in the x direction, and a side wall on a side that is of each boss 14316 and that is away from the other boss 14316 in a same group may be approximately flush with a side wall of the flange 14315. When the phase shifter cavity 1431 is placed on a back surface of the reflection plate 13, the two bosses 14316 in each group of bosses may be separately disposed in a hole 1302 corresponding to the group of bosses, and side walls of the two bosses 14316 may be separately connected to an inner wall of the hole 1302 through welding. In this case, the first side wall 14311, the flange 14315, and the boss 14316 each may be used as a part of the reflection plate 13. During specific implementation, a weld L between the boss 14316 and the reflection plate 13 may penetrate a thickness direction of the reflection plate 13, and the formed weld may be a continuous weld or may be a segmented weld. For details, refer to the disposing manner in the foregoing embodiment. Details are not described herein again.

Similarly, to improve reliability of connection between the phase shifter cavity 1431 and the reflection plate 13, in some embodiments, in addition to welding the boss 14316 and the hole 1302, the flange 14315 and the back surface of the reflection plate 13 may also be fastened through welding, and a weld may be disposed in an annular manner along an edge of the flange 14315, or may be distributed only on one side, two sides, or three sides of the flange 14315, which may be specifically disposed based on an actual situation. This is not limited in this application. In some other embodiments, two opposite sides of the flange 14315 in the y direction may also be fixedly connected to the reflection plate 13 through a screw.

FIG. 24 is a side view of a partial structure of another antenna according to an embodiment of this application. Refer to FIG. 24. In this embodiment, a manner of disposing the boss 14316 of the phase shifter cavity 1431 may be the same as that in the foregoing embodiment. A difference is that the boss 14316 may be welded to the reflection plate 13 through lapping. During specific implementation, an interval between the two bosses 14316 in each group of bosses in the x direction may be greater than a width of the hole in the x direction. In this way, when the phase shifter cavity 1431 is placed on the back surface of the reflection plate 13, the two bosses 14316 in each group of bosses may be separately lapped to the back surface of the reflection plate 13, and each boss 14316 is fastened to the reflection plate 13 through welding at a lapping location.

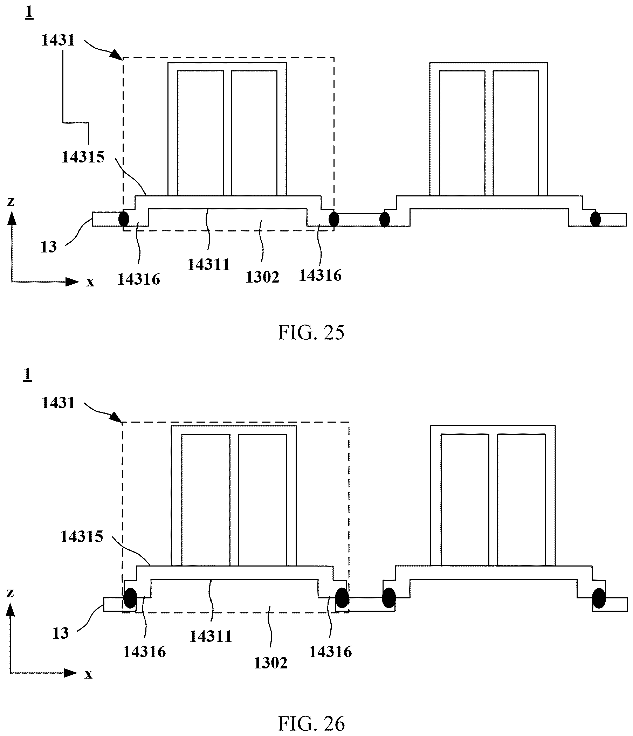

FIG. 25 is a side view of a partial structure of another antenna according to an embodiment of this application. Refer to FIG. 25. In this embodiment of this application, a plurality of groups of bosses may also be disposed on a surface on a side that is of the flange 14315 and that is away from the inside of the phase shifter cavity 1431, and the groups of bosses may be disposed in one-to-one correspondence with holes 1302 in a group of holes, on the reflection plate 13, that corresponds to the phase shifter cavity 1431. Each group of bosses includes two bosses 14316, and the two bosses 14316 in each group of bosses may be respectively disposed on two opposite sides of the flange 14315 in the x direction. Different from the foregoing embodiment, a side that is of each boss 14316 and that is away from the other boss 14316 in a same group may be disposed beyond an edge of the flange 14315. When the phase shifter cavity 1431 is placed on the back surface of the reflection plate 13, the two bosses 14316 in each group of bosses may be separately disposed in a hole 1302 corresponding to the group of bosses, and side walls of the two bosses 14316 may be separately connected to an inner wall of the hole 1302 through welding. A weld may penetrate the thickness direction of the reflection plate 13. During specific implementation, the formed weld may be a continuous weld or may be a segmented weld. For details, refer to the disposing manner in the foregoing embodiment. Details are not described herein again.

FIG. 26 is a side view of a partial structure of another antenna according to an embodiment of this application. Refer to FIG. 26. In this embodiment, a manner of disposing the boss 14316 of the phase shifter cavity 1431 may be the same as that in the foregoing embodiment. A difference is that the boss 14316 may be welded to the reflection plate 13 through lapping. During specific implementation, a distance between side walls that are of the two bosses 14316 in each group of bosses and that are respectively opposite to each other may be greater than a width of the hole 1302 in the x direction. In this way, when the phase shifter cavity 1431 is placed on the back surface of the reflection plate 13, the two bosses 14316 in each group of bosses may be separately lapped to the back surface of the reflection plate 13, and each boss 14316 is fastened to the reflection plate 13 through welding at a lapping location.

For the antenna 1 in the foregoing embodiments, without changing other configurations, a plurality of groups of holes are provided on the reflection plate, and a quantity of screws between the phase shifter cavity and the reflection plate is reduced or the screws are completely removed, so that a passive intermodulation indicator of the antenna can be improved, and a weight and a size of the antenna can be reduced. For example, the passive intermodulation indicator of the antenna may be reduced from -115 dB in the conventional technology to about -121 dB, the weight may be reduced from 78 kg to about 75 kg, and a width of the antenna may also be reduced from 499 mm to about 459 mm.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An antenna, comprising a plurality of phase shifters, wherein the phase shifter comprises a phase shifter cavity, the plurality of phase shifter cavities are disposed in parallel, two adjacent phase shifter cavities are connected through welding, and the plurality of phase shifter cavities form a reflection plate of the antenna.

2. The antenna according to claim 1, wherein the phase shifter cavity comprises a first side wall, first side walls of adjacent phase shifter cavities are connected through welding, and first side walls of the plurality of phase shifter cavities form the reflection plate.

3. The antenna according to claim 1, wherein the phase shifter cavity comprises a first side wall, a flange disposed around the first side wall is disposed on the phase shifter cavity, flanges of adjacent phase shifter cavities are connected through welding, and first side walls and flanges of the plurality of phase shifter cavities form the reflection plate.

4. The antenna according to claim 3, wherein the flange is of an annular structure; or there are a plurality of flanges, and the plurality of flanges are disposed at an interval around the first side wall.

5. The antenna according to claim 3 or 4, wherein flanges of two adjacent phase shifter cavities are disposed through butting; or flanges of adjacent phase shifter cavities are disposed through lapping.

6. The antenna according to any one of claims 1 to 5, wherein a weld between adjacent phase shifter cavities is a continuous weld; or a weld between adjacent phase shifter cavities is a plurality of segmented welds that are spaced apart.

7. An antenna, comprising a reflection plate and a phase shifter, wherein the phase shifter comprises a phase shifter cavity, the phase shifter cavity is fastened to the reflection plate through welding, and the phase shifter cavity forms a part of the reflection plate.

8. The antenna according to claim 7, wherein the reflection plate is provided with a groove corresponding to the phase shifter cavity, and a projection of the phase shifter cavity on a surface of the reflection plate covers the groove.

9. The antenna according to claim 8, wherein the phase shifter cavity comprises a first side wall, the first side wall is disposed in the groove, and the first side wall is welded to an inner wall of the groove; or a surface that is of the first side wall and that is away from the inside of the phase shifter cavity is welded on the surface of the reflection plate; and
the first side wall forms a part of the reflection plate.

10. The antenna according to claim 8, wherein the phase shifter cavity comprises a first side wall, a flange disposed around the first side wall is disposed on the phase shifter cavity, the flange is disposed in the groove, and the flange is welded to an inner wall of the groove; or a surface that is of the flange and that is away from the inside of the phase shifter cavity is welded on the surface of the reflection plate; and
the first side wall and the flange form a part of the reflection plate.

11. The antenna according to claim 10, wherein when the flange is disposed in the groove, the antenna further comprises a connecting piece; and
in a length direction of the phase shifter cavity, the flange at at least one end of the first side wall is fixedly connected to the reflection plate through the connecting piece.

12. The antenna according to claim 7, wherein the phase shifter cavity comprises a first side wall, a plurality of bosses are disposed on the first side wall, and the plurality of bosses are arranged in a length direction of the phase shifter cavity; and
the reflection plate is provided with a plurality of holes respectively corresponding to the plurality of bosses, the first side wall of the phase shifter cavity is disposed on a surface of the reflection plate, a projection of the boss on the surface of the reflection plate covers the corresponding hole, and the boss forms a part of the reflection plate.

13. The antenna according to claim 12, wherein the boss is disposed in the corresponding hole, and the boss is welded to an inner wall of the hole; or a surface that is of the boss and that is away from the inside of the phase shifter cavity is welded on the surface of the reflection plate.

14. The antenna according to claim 7, wherein the phase shifter cavity comprises a first side wall, a flange disposed around the first side wall is disposed on the phase shifter cavity, a plurality of groups of bosses are disposed on the flange, the plurality of groups of bosses are arranged in a length direction of the phase shifter cavity, each group of bosses comprises two bosses, and the two bosses in each group of bosses are arranged in a width direction of the phase shifter cavity; and
the reflection plate is provided with a plurality of holes respectively corresponding to the plurality of groups of bosses, the first side wall of the phase shifter cavity is disposed on a surface of the reflection plate, projections of the first side wall and the flange on the surface of the reflection plate cover the plurality of holes, the boss is welded to the reflection plate, and the first side wall, the flange, and the boss form a part of the reflection plate.

15. The antenna according to claim 14, wherein each group of bosses is disposed in the corresponding hole, and the two bosses in each group of bosses are separately welded to an inner wall of the hole; or surfaces that are of the two bosses in each group of bosses and that are away from the inside of the phase shifter cavity are separately welded on the surface of the reflection plate.

16. The antenna according to claim 14 or 15, wherein a surface that is of each boss and that is away from the other boss in a same group is disposed coplanar with a side wall of the flange; or a surface that is of each boss and that is away from the other boss in a same group is disposed beyond an edge of the flange.

17. The antenna according to any one of claims 7 to 16, wherein a weld between the phase shifter cavity and the reflection plate is a continuous weld; or a weld between the phase shifter cavity and the reflection plate is a plurality of segmented welds that are spaced apart.

18. The antenna according to any one of claims 7 to 17, wherein the antenna further comprises a radiating element, and the radiating element is disposed on a side that is of the reflection plate and that is opposite to a side on which the phase shifter is located.

19. A communication device, comprising the antenna according to any one of claims 1 to 18.
